# EUROPEAN PATENT SPECIFICATION

(11) **EP 1 442 225 B1**
(45) Date of publication and mention of the grant of the patent: **28.05.2008**
(21) Application number: 02773043.1
(22) Date of filing: 04.11.2002
(51) Int. Cl.: F15B 21/04, F15B 1/26, F16H 57/00, F16K 17/19, B62D 5/06

(54) **HYDRAULIC DEVICE WITH BREATHER ASSEMBLY**
HYDRAULISCHE VORRICHTUNG MIT EINEM BELÜFTUNGSAGGREGAT
DISPOSITIF HYDRAULIQUE MUNI D'UN ENSEMBLE RENIFLARD

(30) Priority: 06.11.2001 NL 1019310
(43) Date of publication of application: 04.08.2004
(73) Proprietor: Actuant Corporation, Glendale, Wisconsin 53209-3703 (US)
(72) Inventor: OUDELAAR, Tone, NL-7576 CA Oldenzaal (NL)
(74) Representative: Brookhuis, Hendrik Jan Arnold
(86) International application number: PCT/NL2002/000701
(87) International publication number: WO 2003/040575

(56) References cited:
- WO-A-89/08786
- DE-A- 3 206 965
- DE-A- 4 418 553
- GB-A- 914 089
- US-A- 4 407 125
- US-A- 4 503 678
- US-A- 4 987 740
- US-B1- 6 247 487

## Description

The invention relates to a hydraulic device comprising a housing inside which is a space containing hydraulic fluid and an air volume, and further comprising a breather assembly with a breather duct extending between the outside atmosphere and the abovementioned space, for aerating and de-aerating the abovementioned space during the operation of the hydraulic device.

Such a breather assembly is present in the case of many hydraulic devices, in order to be able to compensate for variation in the volume of hydraulic fluid, in particular in a reservoir for the hydraulic fluid. This variation can result from the device being in operation, but also, for example, from expansion of the fluid when there is a rise in temperature.

WO 89 08786 discloses in its figure 3 a hydraulic device with a breather assembly according to the preamble of claim 1 and which is automatically operated by means of hydraulic pressure on the first time that the hydraulic device is put into operation.

In a known embodiment of a breather assembly put on the market by the applicant, the breather assembly comprises a base element provided with an axial bore that forms the breather duct. The bore has on its ends an inner mouth and an outer mouth respectively, the outer mouth being formed by a tubular part of the base element projecting outwards. An annular valve made of flexible material lies against the free end of the tubular part. The valve has a central hole in line with the outer mouth. The outer periphery of the valve rests against an annular supporting surface of a cap fitted on the base element. Said supporting surface is axially staggered relative to the free end of the tubular part in such a way that the valve is bent and rests under initial tension against the free end.

At a certain excess pressure at the inner mouth, air can escape to the outside atmosphere by the fact that the air flows through the breather duct and the hole in the valve. Said air discharges between the valve and the supporting surface and subsequently along the gap between the base element and the cap.

At a certain reduced pressure at the inner mouth, air is drawn in from the outside atmosphere through the gap between the cap and the base element, which air then passes into the

breather duct between the valve and the free end of the tubular part of the base element.

In the case of the known breather assembly, the valve serves to ensure that an open connection is not present all the time between the inner mouth - and therefore the space to be aerated and de-aerated in the hydraulic device - and the outside atmosphere. The pressure differences relative to the atmospheric pressure, at which the valve opens, are relatively small, for example between 0.2 and 0.6 bar, in order to ensure that the functioning of the hydraulic device is not adversely affected.

It is currently usual for the producer of the hydraulic device to fill the latter with hydraulic fluid already at the time of production, so that the device is directly suitable for putting into operation. For example, the applicant supplies hydraulic devices for moving parts of motor vehicles such as tilting cabs, convertible hoods, boot lids etc. In this case the devices filled with hydraulic fluid are, for example, delivered to the factory where the final assembly of the vehicle is being carried out.

In practice, it is found that, in the period between the production of the hydraulic device and the assembly, leakage of hydraulic fluid occurs through the breather assembly, which is undesirable.

The object of the invention is to provide an improved hydraulic device that overcomes the abovementioned disadvantage.

The invention achieves this object by providing a hydraulic device according to claim 1.

The abovementioned shut-off means ensure that so long as the device is not put into operation the breather duct remains shut off. The shut-off means are preferably disposed near the outer mouth, so that the breather duct is also shut off from the outside atmosphere.

For example, the breather assembly makes it possible to paint the housing of the device with a paint-spraying device, without paint spray being able to penetrate into the breather duct. This is very advantageous for the production process of the device.

The shut-off means can be used in conjunction with a breather assembly provided with valve means that react to an air pressure difference between the inner mouth and the outside atmosphere, but also in the case of a breather assembly that is not provided with such valve means.

The invention makes provision for the seal of the hydraulic device to be removed automatically, i.e. without special human action, when the hydraulic device is put into operation. Furthermore, that removal is permanent, so that the breather assembly remains functioning, unless, of course, the seal is applied again by human action if the design of the breather assembly permits it.

The invention and preferred embodiments thereof will be explained in greater detail below with reference to the drawing, in which:
Fig. 1 shows in cross section a first exemplary embodiment of the breather assembly according to the invention;
Fig. 2 shows a hydraulic plunger pump provided with the breather assembly of Figure 1, in the shut-off state;
Fig. 3 shows the plunger pump of Figure 2 after being put into operation, with the breather assembly in the opened state;
Fig. 4 shows in cross section a second exemplary embodiment of the breather assembly according to the invention, in the closed state;
Fig. 5 shows the breather assembly of Figure 4, in the opened state;
Fig. 6 shows in cross section a third exemplary embodiment of the breather assembly according to the invention, in the closed state; and
Fig. 7 shows the breather assembly of Figure 6, in the opened state.

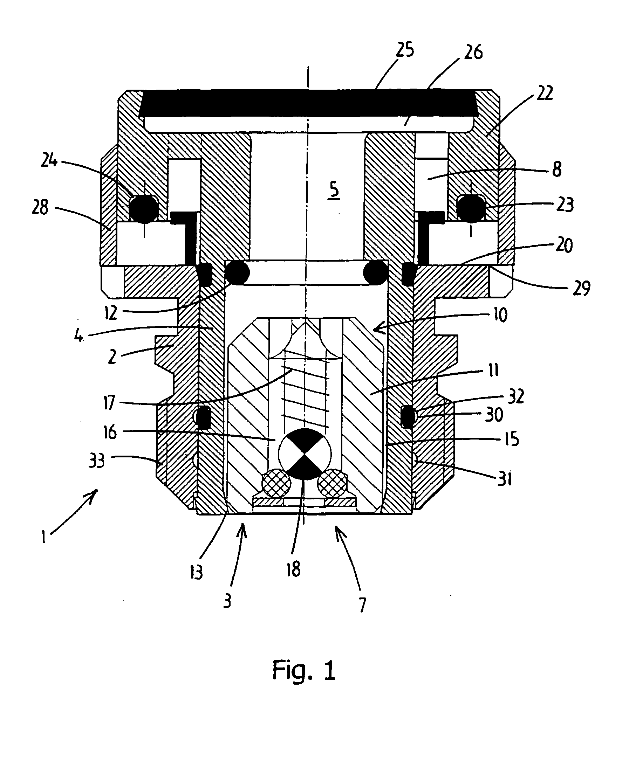

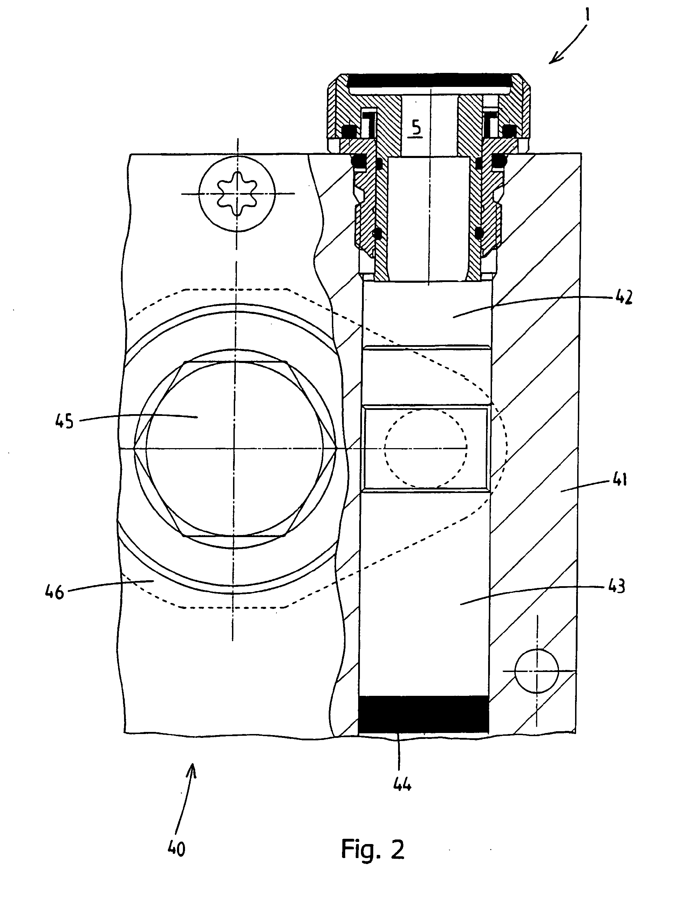

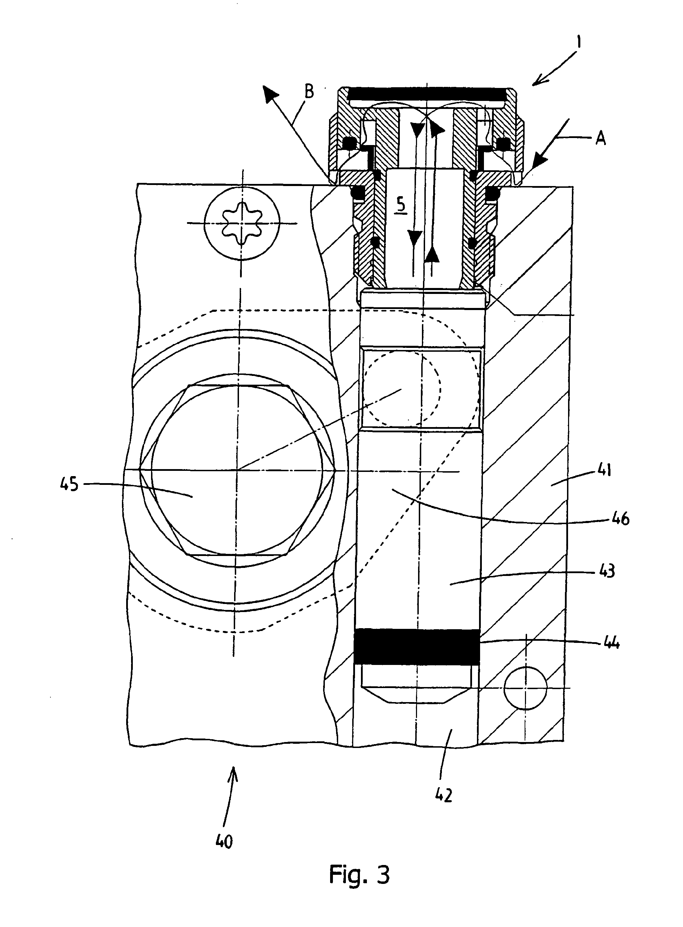

Figure 1 shows a breather assembly 1 according to the invention, with a base element 2 having an axial bore 3 in it. An axially movable element 4 is accommodated in the bore 3. The element 4 is axially movable from a closing position (Figure 2) to an opening position (Figures 1 and 3).

The assembly 1 has a breather duct 5, which extends between an inner mouth 7 and an outer mouth 8.

The inner mouth 7 is designed to be in communication with the air volume in a space of a hydraulic device that is filled with hydraulic fluid and with the air volume. The outer mouth 8 is designed to be in communication with the outside atmosphere. The abovementioned space can consequently be aerated and de-aerated by way of the breather duct 5, in particular in order to compensate for variations in the volume of hydraulic fluid.

A part of the breather duct 5 extends centrally through the element 4. An outflow velocity limiter 10, which is known per se and limits the outflow velocity of the air, is accommodated in the part of the breather duct 5 concerned.

The outflow velocity limiter 10 comprises a piston element 11, which is movable to and fro in the breather duct 5 between corresponding annular stop shoulders 12, 13 of the movable element 4. In this case stop shoulder 12 is formed by an O-ring.

The diameter of the piston element 11 is slightly smaller than that of the breather duct 5, so that an air gap 15 is present.

An excess pressure duct 16 with a corresponding excess pressure valve, here formed by spring 17 and ball 18, is provided in the piston element 11, which excess pressure valve shuts off the excess pressure duct 16 and opens it when there is a certain excess pressure on the side of the inner mouth.

If the flow velocity of the air escaping to the outside atmosphere is too high, the flow velocity limiter will come up against the O-ring 12 and in this way shut off the breather duct 5. This prevents hydraulic fluid particles from being entrained outside as a result of an air velocity that is too high.

For the sake of clarity, the flow velocity limiter 10 is left out in Figures 2 and 3.

On the outside atmosphere side, the base element 2 forms a first annular shut-off surface 20, which extends around the bore 3 for the movable element 4.

The movable element 4 has on the outside atmosphere side a head part 22, which projects from the base element 2 axially beyond the first shut-off surface 20 and has a greater diameter than the bore 3.

The head part 22 of the movable element 4 forms a second annular shut-off surface 23, which in the closing position of the movable element rests in a sealing manner against the first shut-off surface 20, and in the opening position is situated at a distance from the first shut-off surface 20.

In the example shown, the second shut-off surface 23 is formed by a flexible sealing ring 23, which is accommodated in a corresponding groove 24 in the head part 22 of the movable element 4.

The outer mouth 8 lies radially inwards relative to the second shut-off surface 23. In this case the outer mouth 8 is formed by an annular groove 8 in the head part 22, which is open on the side of the base element 2.

In this example the connection between the axial part of breather duct 5 and the outer mouth 8 is obtained by fitting a cap 25 on the head part 22, in such a way that a transverse connection 26 for the air is obtained.

The assembly 1 further comprises a separate annular anti-splash element , which is accommodated as a loose part in the annular outer mouth 8 and rests upon the base element 2. The anti-splash element prevents water and the like from penetrating into the outer mouth 8, in particular when a highpressure washer is being used, for example, to clean the vehicle of which the hydraulic device with the breather assembly 1 forms part.

The assembly 1 also provides an annular wall 28 projecting outwards from the base element 2, which wall lies around the outer periphery of the head part 22, holes 29 through which the air can pass being provided.

The movable element 4 and the base element 2 are provided with interacting snap means, which retain the movable element 4 in the closing position and the opening position. In this example a flexible ring 30 is fitted around the movable element, and two grooves 31, 32 are provided at an axial distance from each other in the periphery of the bore 3 in the base element 2.

The base element 2 in this example is provided with external screw thread 33, for detachably mounting on the housing of the hydraulic device.

A part of a hydraulic pump 40 can be seen in cross section in Figures 2 and 3, which pump is provided with the breather assembly 1 described earlier.

The pump 40 is a manually operated plunger pump with a housing 41 in which a bore 42 is provided. A plunger 43 can move to and fro in the bore 42. The plunger 43 is provided with a sealing ring 44.

A rotary shaft 45 is provided for moving the plunger 43 to and fro, on which shaft a pump handle, for example, can be fitted, in addition to a lever 46 (dashed line) that is fitted immovably on the rotary shaft 45 and is in engagement with the plunger 43.

The breather assembly 1 is fitted in the bore 42 in line with the plunger 43.

During the production of the pump 40 hydraulic fluid is introduced into the pump 40 through the bore 42, the breather assembly 1 not yet having been fitted. Of course, the pump 40 can form part of a larger unit; for example it can be connected to one or more hydraulic actuators.

When the pump has been filled with sufficient hydraulic fluid, the breather assembly 1 is screwed into the bore 42 with the element 4 in the closing position (see Figure 2). This means that no hydraulic fluid can leak out of the pump 40 during the subsequent transport and storage. It is also possible to paint the housing 41 with a paint sprayer without paint spray being able to penetrate into the breather assembly 1.

The breather duct 5 remains shut off so long as the pump 40 is not put into operation.

In the closing position the movable element 4 is situated in the path of the plunger 43 moving to and fro. This ensures that when the pump 40 is first put into operation the plunger 43 goes against the element 4 and then presses the element 4 from the closing position (Figure 2) to the opening position (Figure 3). The snap means then hold the element in that opening position.

The hermetic seal of the breather duct 5 is therefore automatically and permanently removed when the pump 40 is first put into operation. The automatic removal of the seal ensures that the mechanic does not make the mistake of forgetting to remove the seal, which would lead to the pump 40 not functioning properly.

In Figure 3 the arrows A and B indicate the route of the air if air is being drawn in and air is being blown out respectively. Of course the inventive idea can also be used in the case of other hydraulic devices.

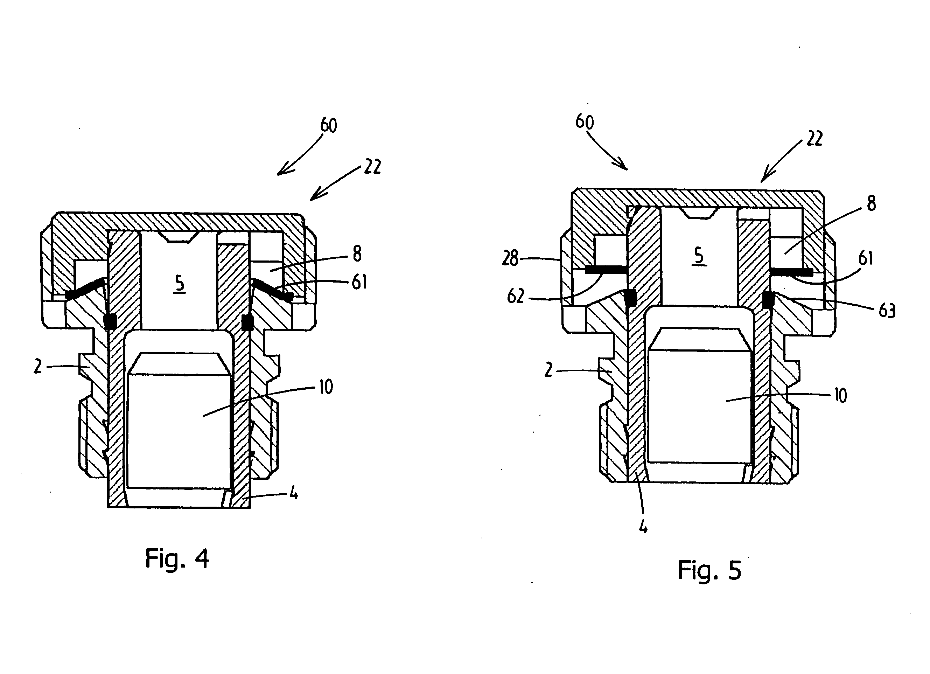

Figures 4 and 5 show a breather assembly 60, which corresponds largely to the breather assembly 1. Parts corresponding to parts of the breather assembly 1 have been provided with the same reference numerals.

The breather assembly 60 is also provided with a movable element 4 and can therefore be operated in the same way as the breather assembly 1.

The major difference is the presence of an annular flexible valve 61, which extends over the annular outer mouth 8 and at the outer periphery is fixed to the head part 22.

In the opening position of the element 4, said valve 61 will deform under the influence of a slight excess pressure or reduced pressure in the space to be aerated and de-aerated, and in doing so will open the breather duct 5. The valve 61 also acts as an anti-splash facility as explained earlier.

The valve 61 also forms the second shut-off surface 62 of the head part 22, which in the closing position of the element 4 rests in a sealing manner against the first shut-off surface 63 provided on the base element 2. The first shut-off surface 63 is of a conical design, in such a way that the shut-off surface 63 slopes inwards.

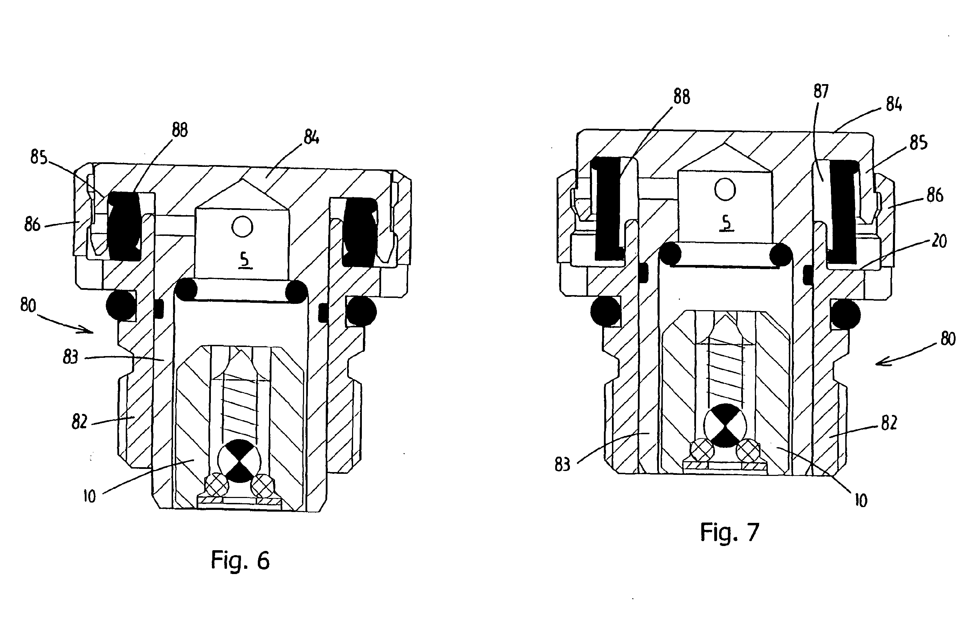

Figures 6 and 7 show a third embodiment of the breather assembly according to the invention. The design and functioning largely correspond to those of the embodiments explained earlier. For this reason, corresponding parts have been provided with the same reference numerals.

The breather assembly 80 has a base element 82 with a bore, in which movable element 83 is accommodated in such a way that it can move up and down.

The movable element 83 has a head part 84 with a peripheral wall 85, which falls inside a peripheral wall 86 of the base element 82. The inside of the peripheral wall 86 together with the peripheral wall 85 forms a snap connection, two snap positions being provided. Said snap positions correspond to the opened and closed position of the breather assembly 80.

The peripheral wall 85 bounds a peripheral groove 87 in which a flexible annular element 88 is accommodated. The flexible annular element 88 can rest in a sealing manner against the head part 84 and against the base element.

In the closed position (Fig. 6) the annular element 88 is compressed and in this way forms a seal between the base element and the movable element.

In the opened position (Fig. 7) the contact pressure of the annular element 88 against the base element and/or the movable element is low, so that when there is a slight pressure difference air can pass along the annular element 88.

The annular element 88 also acts as an anti-splash element, which prevents water, for example, from penetrating during cleaning of the device in which the breather assembly 80 is fitted.

Although the breather assemblies 1, 60 and 80 are designed to make the corresponding movable element 4 move, under the influence of a mechanical force, from the closing position to the opening position when the corresponding hydraulic device is first put into operation, it will be clear to the person skilled in the art that a pressure increase on the side of the inner mouth 7 can also lead to said movement. For example, such a pressure increase can occur if the manual pump 40 is incorporated in a system with an electrically operable pump and said electric pump is started up when the device is first put into operation. The pressure increase that can result may be sufficient to move the element 4 and open the breather duct 5.

## Claims

1. Hydraulic device (40) comprising:
- a housing (41) inside which is a space (42) filled with hydraulic fluid and an air volume, and
- a breather assembly (1; 60; 80) with a breather duct (5) extending between the outside atmosphere and the abovementioned spacer (42), for aerating and de-aerating the abovementioned space (42), in particular during the operation of the hydraulic device, wherein the breather assembly (1; 60; 80) is provided with shut-off means (4, 20, 23; 4, 61, 63; 85, 86), which shut off the breather duct (5) until the hydraulic device (40) is first put into operation, the hydraulic device (40) being designed in such a way that when it is first put into operation the seal of the breather duct (5) provided by the shut-off means is automatically and permanently removed and in which the shut-off means comprise a movable element (4; 83), which is movable between a closing position, in which the breather duct (5) is shut off, and an opening position, in which the seal is removed, **characterised in that** the device (40) comprises mechanical movement means (43, 45, 46) for moving the movable element 4;83).

2. Device (40) according to claim 1, in which the breather assembly comprises valve means (17,18) that react to air pressure difference and at a predetermined reduced pressure and/or excess pressure between the space (42) and the outside atmosphere open the breather duct (5).

3. Device (40) according to any one of the preceding claims in which first retaining means (30, 31; 85, 86) are provided, which retaining means retain the movable element (4; 83) in the closing position until the device is first put into operation, and which release the movable element (4;83) when it is first put into operation.

4. Device (40) according to claim 3, in which second retaining means (30, 32; 85, 86), which hold the movable element (4;83) in the opening position, are provided.

5. Device (40) according to any one of the preceding claims, in which the device is a plunger pump (40) with one or more plungers (43) that are movable to and fro in a corresponding bore (42), and in which a plunger drives the movable element (4:83)

6. Device (40) according to any one of the preceding claims, in which the movable element (4;83) is movable from the closing position to the opening position under the influence of hydraulic pressure in the abovementioned space.

7. Device (40) according to any one of the preceding claims, in which the breather duct (5) extends between an inner mouth (7), which opens into the space to be aerated and de-aerated in the hydraulic device (40) and an outer mouth (8) which opens into the outside atmosphere, which breather assembly (1;60;80) comprises a base element (2,82) with an axial bore (3) in it, wherein the moveable elements (4;83) is axially movable and fits into the bore (3) and is axially movable from a closing position to an opening position, while a part of the breather duct (5) extends through the movable element (4,83).

8. Device (40) according to claim 7, in which on the outside atmosphere side the base element (2) forms a first annular shut-off surface, (20) which extends around the bore (3) for the movable element, (4;83) and in which on the outside atmosphere side the movable element (4;83) has a head part (22) which projects from the base element (2) beyond the first shut-off surface (20) and has a greater diameter than the bore (3), and in which the head part (22) of the movable (4;83) element forms a second annular shut-off surface, (23) which in the closing position of the movable element (4;83) rests in a sealing manner against the first shut-off surface (20), and in the opening position is situated at a distance from the first shut-off surface (20).

9. Device (40) according to claim 8, in which the first and/or second shut-off surface is/are formed by a flexible sealing ring, (23), which is accommodated in a corresponding groove (24) in the base element (2) or the head part (22) of the movable element (4;83), and in which the outer mouth (8) lies radially inwards relative to the second shut-off surface.

10. Device (40) according to claim 8, or 9, in which the outer mouth (8) is formed by an annular groove in the head part (22), which groove is open on the side of the base element (2).

11. Device (40) according to claim 10, in which a separate annular anti-splash element (27) is provided, which anti-splash element (27) is accommodated loose in the annular outer mouth (8) and rests upon the base element (2), and which anti-splash element (27) prevents water from penetrating into the outer mouth (8), in particular when a highpressure washer is being used.

12. Device (40) according to any one of claims 8-11, in which an outflow velocity limiter (10), which limits the outflow velocity of the air, is accommodated in the breather duct (5).

13. Device (40) according to claim 12, in which the outflow velocity limiter (10), comprises a piston element (11), which is movable to and fro in the breather duct (5) between corresponding stop shoulders (12,13) of the movable element (4,83) the diameter of the piston element (11) being slightly smaller than that of the breather duct (5), so that an air gap is present.

14. Device (40) according to claim 13, in which in the piston element (11) an excess pressure duct (16) is provided with a corresponding excess pressure valve (17,18) which excess pressure valve (17,18) shuts off the excess pressure duct (16) and opens it when there is a certain excess pressure in the abovementioned space (42).

15. Device (40) according to any one of claims 8 - 14, in which an annular valve (61) is provided, extending over the outer mouth (8) and being fixed on the inner periphery or the outer periphery to the head part (22) of the movable element (4;83) which valve (61) deforms under the influence of a slight excess pressure or reduced pressure in the abovementioned space (42) and opens the breather duct (5).

16. Device (40) according to claim 15, in which the annular valve (61) also forms the second shut-off surface (23) of the head part (22) of the movable element (4,83).

17. Device (40) according to claim 16, in which the first shut-off surface (20) is of a conical design, so that the shut-off surface slopes up inwards.

## Patentansprüche

1. Hydraulische Vorrichtung (40), enthaltend:
- ein Gehäuse (41) innerhalb dessen ein Raum (42) mit hydraulischer Flüssigkeit, und mit einem Luftvolumen gefüllt ist, und
- eine Entlüftungsbaugruppe (1; 60; 80) mit einem Entlüftungsdurchgang (5), der sich zwischen der äußeren Atmosphäre und dem zuvor benannten Raum (42) erstreckt, um den zuvor benannten Raum (42) zu belüften und zu entlüften, insbesondere während des Betriebs der hydraulischen Vorrichtung, worin die Entlüftungsbaugruppe (1; 60; 80) versehen ist mit Absperrmitteln (4, 20, 23; 4, 61, 63; 85, 86), die den Entlüftungsdurchgang (5) verschließen bis die hydraulische Vorrichtung (40) erstmals in Betrieb genommen wird, und die hydraulische Vorrichtung (40) so ausgelegt ist, dass wenn sie das erste Mal in Betrieb genommen wird, der Verschluss des Entlüftungsdurchgangs (5), der versorgt ist durch die Absperrmittel, automatisch und andauernd beseitigt wird, und in welcher die Absperrmittel ein bewegliches Bauteil (4; 83) umfassen, welches zwischen einer geschlossenen Stellung, in welcher der Entlüftungsdurchgang (5) geschlossen ist, und einer offenen Stellung, in welcher der Verschluss beseitigt ist, beweglich ist, **dadurch gekennzeichnet, dass** die Vorrichtung (40) mechanische Bewegungsmittel (43, 45, 46) enthält, um das bewegliche Bauteil (4; 83) zu bewegen.

2. Vorrichtung (40) nach Anspruch 1, in welcher die Entlüftungsbaugruppe Ventilmittel (17, 18) umfasst, die auf eine Luftdruckdifferenz hin ansprechen, und bei einem vorbestimmten reduzierten Druck und/oder übersteigendem Druck zwischen dem Raum (42) und der äußeren Atmosphäre den Entlüftungsdurchgang (5) öffnen.

3. Vorrichtung (40) nach einem der vorhergehenden Ansprüche, in welcher erste Rückhaltemittel (30, 31; 85, 86) vorgesehen sind, welche das bewegliche Bauteil (4; 83) in der geschlossenen Stellung halten bis die Vorrichtung das erste Mal in Betrieb genommen wird, und welche das bewegliche Bauteil (4; 83) freigeben, wenn sie das erste Mal in Betrieb genommen wird.

4. Vorrichtung (40) nach Anspruch 3, in welcher zweite Zurückhaltemittel (30, 32; 85, 86) vorgesehen sind, welche das bewegliche Bauteil (4; 83) in der offenen Stellung halten.

5. Vorrichtung (40) nach einem der vorhergehende Ansprüche, in welcher die Vorrichtung eine Kolbenpumpe (40) ist, mit einem oder mehreren Kolben (43), die in einer entsprechenden Bohrung (42) hin und her beweglich sind, und in welcher ein Kolben das bewegliche Bauteil (4; 83) bewegt.

6. Vorrichtung (40) nach einem der vorhergehenden Ansprüche, in welcher das bewegliche Bauteil (4; 83) von der geschlossenen Stellung zu der offenen Stellung unter dem Einfluss von hydraulischem Druck in dem zuvor genannten Raum beweglich ist.

7. Vorrichtung (40) nach einem der vorhergehenden Ansprüche, in welcher sich der Entlüftungsdurchgang (5) zwischen einer inneren Mündung (7), welche in den Raum hinein führt, der zu belüften und zu entlüften ist, in der hydraulischen Vorrichtung (40), und einer äußeren Mündung (8), die zu der äußeren Atmosphäre hin führt, erstreckt, wobei die Entlüftungsbaugruppe (1; 60; 80) ein Grundbauteil (2; 82) mit einer axialen Bohrung (3) innerhalb demselben enthält, in der das bewegliche Bauteil (4; 83) axial beweglich ist, und in die Bohrung (3) eingepasst ist, und von einer geschlossenen Stellung zu einer offenen Stellung axial beweglich ist, während sich ein Teil des Entlüftungsdurchgangs (5) durch das bewegliche Bauteil (4; 83) erstreckt.

8. Vorrichtung (40) nach Anspruch 7, in welcher auf der äußeren Atmosphärenseite das Grundbauteil (2) eine erste ringförmige Absperroberfläche (20) bildet, welche sich um die Bohrung (3) für das bewegliche Bauteil (4; 83) erstreckt, und in welcher auf der äußeren Atmosphärenseite des beweglichen Elements (4, 83) sich ein Kopfteil (22) befindet, welches sich von dem Grundbauteil (2) außerhalb der ersten Absperroberfläche (20) erstreckt, und einen größeren Durchmesser hat, als die Bohrung (3), und in welcher der Kopfteil (22) des beweglichen Bauteils (4; 83) eine zweite ringförmige Absperroberfläche (23) bildet, welche in der geschlossenen Stellung des beweglichen Bauteils (4; 83) auf der ersten Absperroberfläche (20) verschlussartig aufsitzt, und sich in der geöffneten Stellung in einem Abstand von der ersten Absperroberfläche (20) befindet.

9. Vorrichtung (40) nach Anspruch 8, in welcher die erste und/oder zweite Absperroberfläche durch einen flexiblen Dichtungsring (23) gebildet wird, welcher in einer entsprechenden Nut (24) in dem Grundbauteil (2) oder dem Kopfstück (22) des beweglichen Bauteils (4; 83) untergebracht ist, und in welchem sich die äußere Mündung (8) radial innerhalb relativ zu der zweiten Absperroberfläche befindet.

10. Vorrichtung (40) nach Anspruch 8 oder 9, in welcher die äußere Mündung (8) durch eine ringförmige Nut in dem Kopfstück (22) gebildet ist, wobei diese Nut auf der Seite des Grundbauteils (2) offen ist.

11. Vorrichtung (40) nach Anspruch 10, in welcher ein separates, ringförmiges, Spritzwasser verhinderndes Bauteil (27) vorgesehen ist, wobei das Spritzwasser verhindernde Bauteil (27) lose in der kreisringförmigen, äußeren Mündung (8) und auf dem Grundbauteil (2) aufsitzt, und wobei das Spritzwasser verhindernde Bauteil verhindert, dass Wasser in die äußere Mündung (8) eindringen kann, insbesondere, wenn ein Hochdruckreinigungsgerät verwendet wird.

12. Vorrichtung (40) nach einem der vorhergehenden Ansprüche 8 bis 11, in welcher ein Ausflussgeschwindigkeitsbegrenzer (10), welcher die Ausflussgeschwindigkeit der Luft begrenzt, in dem Entlüftungsdurchgang untergebracht ist.

13. Vorrichtung (40) nach Anspruch 12, in welcher der Ausflussgeschwindigkeitsbegrenzer (10) ein Kolbenbauteil (11) umfasst, welches hin- und herbewegbar ist, in dem Entlüftungsdurchgang (5) zwischen entsprechenden Anschlagschultern (12, 13) des beweglichen Bauteils (4; 83), wobei der Durchmesser des Kolbenbauteils (11) geringfügig kleiner ist, als der des Entlüftungsdurchgangs (5), so dass ein Luftspalt vorhanden ist.

14. Vorrichtung (40) nach Anspruch 13, in welcher in dem Kolbenbauteil (11) ein Überdruckdurchgang (16) vorgesehen ist, mit einem entsprechenden Überdruckventil (17, 18) wobei dieses Überdruckventil (17, 18) den Überdrucksdurchgang (16) absperrt, und ihn öffnet, wenn ein bestimmter Überdruck in dem zuvor genannten Raum (42) vorhanden ist.

15. Vorrichtung (40) nach einem der Ansprüche 8 bis 14, in welcher ein kreisförmiges Ventil (61) vorgesehen ist, welches sich über die äußere Mündung (8) erstreckt, und welches an dem inneren Umfang oder dem äußeren Umfang des Kopfstückes (22) des beweglichen Bauteils (4; 83) angebracht ist, wobei sich dieses Ventil (61) verformt unter dem Einfluss eines leichten Überdrucks oder Unterdrucks in dem zuvor genannten Raum (42) und den Entlüftungsdurchgang (5) öffnet.

16. Vorrichtung (40) nach Anspruch 15, in welcher das kreisringförmige Ventil (61) auch die zweite Absperroberfläche (23) des Kopfstückes (22) des beweglichen Bauteils (4; 83) bildet.

17. Vorrichtung (40) nach Anspruch 16, in welcher die erste Absperroberfläche (20) eine konische Formgebung hat, so dass diese Absperroberfläche nach innen gerichtet schräg ragt.

## Revendications

1. Dispositif hydraulique (40) comprenant :
un boîtier (41) à l'intérieur duquel on trouve un espace (42) rempli de fluide hydraulique et d'un volume d'air, et
un ensemble de reniflard (1 ; 60 ; 80) avec un conduit de reniflard (5) s'étendant entre l'atmosphère extérieure et l'espace (42) mentionné ci-dessus pour aérer et éliminer l'air de l'espace (42) mentionné ci-dessus, en particulier pendant le fonctionnement du dispositif hydraulique, dans lequel l'ensemble de reniflard (1 ; 60 ; 80) est doté de moyens de fermeture (4, 20, 23; 4, 61, 63 ; 85, 86) qui ferment le conduit de reniflard (5) jusqu'à ce que le dispositif hydraulique (40) soit tout d'abord mis en fonctionnement, le dispositif hydraulique (40) étant conçu de sorte que lorsqu'il est mis dans un premier temps en fonctionnement, le joint d'étanchéité du conduit de reniflard (5) fourni par les moyens de fermeture est automatiquement et en permanence retiré, et dans lequel les moyens de fermeture comprennent un élément mobile (4 ; 83), qui est mobile entre une position de fermeture, dans laquelle le conduit de reniflard (5) est fermé, et une position d'ouverture, dans laquelle le joint d'étanchéité est retiré, **caractérisé en ce que** le dispositif (40) comprend des moyens de mouvement mécaniques (43, 45, 46) pour déplacer l'élément mobile (4 ; 83).

2. Dispositif (40) selon la revendication 1, dans lequel l'ensemble de reniflard comprend des moyens de soupape (17, 18), qui réagissent à la différence de pression d'air et à une pression réduite prédéterminée et/ou une pression excessive entre l'espace (42) et l'atmosphère externe ouverte sur le conduit de reniflard (5).

3. Dispositif (40) selon l'une quelconque des revendications précédentes, dans lequel on prévoit des premiers moyens de retenue (30, 31 ; 85, 86), lesquels moyens de retenue retiennent l'élément mobile (4 ; 83) dans la position de fermeture jusqu'à ce que le dispositif soit placé dans un premier temps en fonctionnement, et qui libèrent l'élément mobile (4 ; 83) lorsqu'il est mis dans un premier temps en fonctionnement.

4. Dispositif (40) selon la revendication 3, dans lequel on prévoit des seconds moyens de retenue (30, 32 ; 85, 86), qui maintiennent l'élément mobile (4 ; 83) dans la position d'ouverture.

5. Dispositif (40) selon l'une quelconque des revendications précédentes, dans lequel le dispositif est une pompe à piston plongeur (40) avec un ou plusieurs pistons plongeurs (43) qui sont mobiles selon un mouvement de va et vient dans un alésage (42) correspondant et dans lequel un piston plongeur entraîne l'élément mobile (4 ; 83).

6. Dispositif (40) selon l'une quelconque des revendications précédentes, dans lequel l'élément mobile (4 ; 83) est mobile de la position de fermeture à la position d'ouverture sous l'influence de la pression hydraulique dans l'espace mentionné ci-dessus.

7. Dispositif (40) selon l'une quelconque des revendications précédentes, dans lequel le conduit de reniflard (5) s'étend entre une embouchure interne (7) qui s'ouvre dans l'espace destiné à être aéré et dépourvu d'air dans le dispositif hydraulique (40), et une embouchure externe (9) qui s'ouvre à l'atmosphère extérieure, lequel ensemble de reniflard (1 ; 60 ; 60) comprend un élément de base (2 ; 82) avec un alésage axial (3) à l'intérieur de celui-ci, dans lequel l'élément mobile (4; 83) est axialement mobile et s'adapte dans l'alésage (3) et est axialement mobile d'une position de fermeture à une position d'ouverture, alors qu'une partie du conduit de reniflard (5) s'étend à travers l'élément mobile (4 ; 83).

8. Dispositif (40) selon la revendication 7, dans lequel sur le côté de l'atmosphère externe, l'élément de base (2) forme une première surface de fermeture annulaire (20), qui s'étend autour de l'alésage (3) pour l'élément mobile (4 ; 83) et dans lequel du côté de l'atmosphère externe, l'élément mobile (4 ; 83) a une partie de tête (22) qui fait saillie de l'élément de base (2) au-delà de la première surface de fermeture (20) et a un diamètre supérieur à l'alésage (3), et dans lequel la partie de tête (22) de l'élément mobile (4 ; 83) forme une seconde surface de fermeture annulaire (23), qui, dans la position de fermeture de l'élément mobile (4 ; 83), repose d'une manière étanche contre la première surface de fermeture (20), et dans la position d'ouverture, est située à une certaine distance de la première surface de fermeture (20).

9. Dispositif (40) selon la revendication 8, dans lequel la première et/ou la seconde surface de fermeture est/sont formée(s) par une bague d'étanchéité flexible(23) qui est logée dans une rainure correspondante (24) dans l'élément de base (2) ou la partie de tête (22) de l'élément mobile (4 ; 83) et dans lequel l'embouchure externe (8) se trouve radialement vers l'intérieur par rapport à la seconde surface de fermeture.

10. Dispositif (40) selon la revendication 8 ou 9, dans lequel l'embouchure externe (8) est formée par une rainure annulaire dans la partie de tête (22), laquelle rainure est ouverte du côté de l'élément de base (2).

11. Dispositif (40) selon la revendication 10, dans lequel on prévoit un élément anti-éclaboussure annulaire séparé (27), lequel élément anti-éclaboussure (27) est logé sans serrage dans l'embouchure externe annulaire (8) et repose sur l'élément de base (2), et lequel élément anti-éclaboussure (27) empêche l'eau de pénétrer dans l'embouchure externe (8), en particulier lorsqu'une rondelle à haute pression est utilisée.

12. Dispositif (40) selon l'une quelconque des revendications 8 à 11, dans lequel un limiteur de vitesse d'écoulement (10), qui limite la vitesse d'écoulement de l'air, est logé dans le conduit de reniflard (5).

13. Dispositif (40) selon la revendication 12, dans lequel le limiteur de vitesse d'écoulement (10) comprend un élément de piston (11) qui est mobile selon un mouvement de va et vient dans le conduit de reniflard (5) entre les épaulements de butée correspondants (12, 13) de l'élément mobile (4 ; 83), le diamètre de l'élément de piston (11) étant légèrement inférieur à celui du conduit de reniflard (5) de sorte qu'un espace d'air est présent.

14. Dispositif (40) selon la revendication 13, dans lequel dans l'élément de piston (11), on prévoit un conduit de pression excessive (16) avec une soupape de pression excessive (17, 18) correspondante, laquelle soupape de pression excessive (17, 18) ferme le conduit de pression excessive (16) et l'ouvre lorsqu'il y a une certaine pression excessive dans l'espace (42) mentionné ci-dessus.

15. Dispositif (40) selon l'une quelconque des revendications 8 à 14, dans lequel on prévoit une soupape annulaire (61), s'étendant sur l'embouchure externe (8) et étant fixée sur la périphérie interne ou la périphérie externe à la partie de tête (22) de l'élément mobile (4 ; 83), laquelle soupape (61) se déforme sous l'influence d'une légère pression excessive ou d'une légère pression réduite dans l'espace (42) mentionné ci-dessus et ouvre le conduit de reniflard (5).

16. Dispositif (40) selon la revendication 15, dans lequel la soupape annulaire (61) forme également la seconde surface de fermeture (23) de la partie de tête (22) de l'élément mobile (4 ; 83).

17. Dispositif (40) selon la revendication 16, dans lequel la première surface de fermeture (20) a une conception conique, de sorte que la surface de fermeture s'incline vers l'intérieur.
